Europäisches Patentamt

European Patent Office

Office européen des brevets

(11) EP 0 786 584 B1

(19)

(12) **EUROPÄISCHE PATENTSCHRIFT**

(45) Veröffentlichungstag und Bekanntmachung des Hinweises auf die Patenterteilung:
**26.04.2000  Patentblatt 2000/17**

(51) Int Cl.⁷: **F01M 11/12**, G01F 23/00

(21) Anmeldenummer: **96119243.2**

(22) Anmeldetag: **30.11.1996**

(54) **Verfahren zur Bestimmung einer Flüssigkeitsmenge, insbesondere der Motorölmenge, in einem Kraftfahrzeug**

Method for determining a liquid quantity, especially the quantity of oil, in a motor vehicle

Procédé de détermination d'une quantité de liquide notamment la quantité d'huile, dans un véhicule automobile

(84) Benannte Vertragsstaaten:
**DE FR GB IT SE**

(30) Priorität: **25.01.1996  DE 19602599**

(43) Veröffentlichungstag der Anmeldung:
**30.07.1997  Patentblatt 1997/31**

(73) Patentinhaber: **DaimlerChrysler AG
70567 Stuttgart (DE)**

(72) Erfinder:
• **Gürtler, Thomas
70499 Stuttgart (DE)**

• **Hartmann, Markus
78532 Tuttlingen (DE)**
• **Land, Klaus
73770 Denkendorf (DE)**
• **Weinschenk, Alfred
70736 Fellbach (DE)**

(56) Entgegenhaltungen:
**EP-A- 0 234 906       EP-A- 0 515 326
DE-A- 4 118 896       DE-A- 4 429 234
US-A- 5 072 615       US-A- 5 282 386**

## Beschreibung

Die Erfindung bezieht sich auf Verfahren zur Bestimmung der Menge einer in einem weitgehend abgeschlossenen System eines Kraftfahrzeuges befindlichen Flüssigkeit, deren Füllstand fahrzustandsabhängig schwankt, nach dem Oberbegriff des Anspruchs 1. Insbesondere bezieht sich die Erfindung auf ein Verfahren zur Motorölmengenbestimmung.

Aus der Patentschrift EP 0 191 458 B1 ist ein Warnsystem für die Motorölalterung bei einem Kraftfahrzeug bekannt, bei dem jeweils nach Anschalten der Zündung und vor dem Starten des Motors der Motorölfüllstand erfaßt und mit dem bisher vorliegenden Füllstandswert verglichen wird. Ist der aktuell erfaßte Ölstandswert nicht größer als der bisherige Wert, wird letzterer durch den neu gemessenen Wert aktualisiert. Während des anschließenden Fahrbetriebs nach Starten des Motors wird eine integrale, ölalterungsindikative Größe aus der Erfassung der zurückgelegten Fahrleistung, der Öltemperatur und der Motorgeschwindigkeit abgeleitet und parallel dazu eine Ölgebrauchsdauer ermittelt. Sobald diese Größen vorgegebene Grenzwerte erreicht haben, wird eine Ölwechselwarnmeldung erzeugt. Ergibt sich beim Vergleich des neu gemessenen Ölstands mit dem bisher vorliegenden Wert, daß der erstere größer als letzterer ist, so wird dies dahingehend interpretiert, daß in der vorangegangenen Fahrzeugstillstandsphase ein Ölnachfüll- oder Ölwechselvorgang stattgefunden hat. In diesem Fall werden die integrale ölalterungsspezifische Größe sowie die parallel dazu erfaßte Ölgebrauchsdauer auf aktuelle Werte gesetzt, die berücksichtigen, daß zu einem bestimmten Anteil frisches Öl zugegeben wurde.

In der Patentschrift DE 40 38 972 C1 ist eine Vorrichtung zur Berechnung eines Kraftfahrzeug-Wartungsintervalles beschrieben, bei der über einen an geeigneter Stelle in einem Öleinfüllstutzen angeordneten Durchflußsensor oder einen in die Motorölwanne eingebauten Ölstandsmesser die bei einem Motorölnachfüllvorgang nachgefüllte Ölmenge erfaßt und in Abhängigkeit von der ermittelten Ölnachfüllmenge das normale Wartungsintervall um einen definierten Zeitraum bzw. eine definierte Fahrleistung verlängert wird. In die Berechnung des Wartungsintervalles gehen verschiedene Betriebswerte ein, wie Startanzahl, Kurbelwellenumdrehungen, Fahr- und Standzeiten, Motortemperatur, Motoröldruck, Ladeluftdruck, Ölverbrauch und Kraftstoffverbrauch.

In der Patentschrift US 4.306.525 ist eine Motorölanzeigeeinrichtung offenbart, mit der beim Starten des Motors eine Messung des Ölstands und während eines späteren Zeitintervalls eine Opazitätsmessung zur Beurteilung des Motorölalterungszustandes durchgeführt werden.

Bei sämtlichen oben erwähnten bekannten Verfahren werden die Füllstandsmeßvorgänge auf diejenigen Zeiträume beschränkt, in denen das Fahrzeug mit abgestelltem Motor steht, um Meßfehler für den fahrzustandsabhängig schwankenden Füllstand zu vermeiden. Während des laufenden Fahrbetriebs erfolgt keine Überwachung der Flüssigkeitsmenge und damit des Flüssigkeitsverbrauchs. Dies ist jedoch häufig wünschenswert, beispielsweise zur Ermittlung des Motorölverbrauchs in Abhängigkeit von der Fahrleistung für Wartungsdiagnostikzwecke und zur Erkennung übermäßigen Ölverbrauchs oder notwendiger Nachfüllvorgänge bereits im laufenden Fahrbetrieb.

In der Offenlegungsschrift DE 44 29 234 A1 ist ein Verfahren zur Ermittlung des Ölverbrauchs eines Motors in einem Fahrzeug beschrieben, das von einem Ölstandsschalter oder alternativ von einem Temperaturfühler Gebrauch macht. Mit dem Ölstandsschalter wird festgestellt, ob der momentane Füllstand über oder unter einem vorgegebenen Ansprechpegel liegt. Mit dem Temperaturfühler können Temperatursprünge festgestellt werden, die auf das Über-bzw. Unterschreiten des vorgegebenen Ölpegels zurückgeführt werden können. Die Häufigkeit festgestellter Über- bzw. Unterschreitungen des vorgegebenen Ölpegels wird in einem Histogramm in Abhängigkeit von der Motordrehzahl abgetragen. Dabei kann vorgesehen sein, nur Über- oder Unterschreitungen des vorgegebenen Ölpegels zu berücksichtigen, bei denen die Öltemperatur innerhalb eines definierten Temperaturfensters liegt und/oder das Motordrehmoment keine zu großen Änderungen erfährt. Das Histrogramm wird dann hinsichtlich der relativen Häufigkeit des einen der beiden möglichen Ölpegelabfragezustände in Abhängigkeit von der Drehzahl ausgewertet. Das erhaltene Ergebnis wird mit einem vorgegebenen Ölmengenkennfeld verglichen, welches die Ölmenge in Abhängigkeit von der Motordrehzahl und dieser relativen Häufigkeit des Pegelabfragezustandes wiedergibt, woraus dann die aktuelle Ölmenge geschätzt wird.

Bei einem in der Patentschrift US 5.282.386 offenbarten Verfahren der eingangs genannten Art wird der Getriebeölfüllstand in einem Automatgetriebe bestimmt, wobei neben dem Füllstand zusätzlich die Öltemperatur sowie die Motor- und die Getriebegeschwindigkeit gemessen werden. Anhand dieser Meßwerte wird dann der Einfluß schwankender Öltemperatur und sich ändernder Motordrehzahl auf den gemessenen Füllstandswert anhand geeignet vorgegebener Kennlinien kompensiert.

Der Erfindung liegt als technisches Problem die Bereitstellung eines Verfahrens der eingangs genannten Art zugrunde, mit dem sich die Flüssigkeitsmenge in einem weitgehend abgeschlossenen System eines Kraftfahrzeuges über Füllstandsmessungen trotz fahrzustandsabhängig schwankendem Füllstand auch im laufenden Fahrbetrieb vergleichsweise zuverlässig ermitteln läßt.

Dieses Problem wird durch ein Verfahren mit den Merkmalen des Anspruchs 1 gelöst. Dazu werden Fahrbetrieb fahrzustandsindikative Größen erfaßt, woraus der momentane Fahrzustand ermittelt wird. Wenigstens während ausgewählter Fahrzustände wird im Fahrbetrieb kontinuierlich der zu dem jeweiligen Fahrzustand gehörige Flüssigkeitsfüllstand erfaßt und anhand einer vorgegebenen Abhängigkeit der Fluidmenge vom Fahrzustand und vom Füllstand die momentane Füllmenge bestimmt.

Diese Art der Flüssigkeitsmengenbestimmung bleibt weitestgehend unbeeinflußt von den fahrzustandsabhängigen Schwankungen des Flüssigkeitsfüllstandes, da diese Schwankungen durch die hierzu passend vorgegebene Abhängigkeit des Flüssigkeitsstandes und damit der Flüssigkeitsmenge vom Fahrzustand herausgerechnet und zudem wegen der laufenden Meßwertgewinnung statistisch herausgemittelt werden können. Dies macht es möglich, die Menge der Flüssigkeit deren Füllstand fahrzustandsabhängig schwankt, über Füllstandsmessungen nicht nur bei stehendem Fahrzeug und abgestelltem Motor, sondern auch im laufenden Fahrbetrieb zuverlässig festzustellen. Damit kann beispielsweise eine Unter- oder Überfüllung an Motoröl oder das Erreichen einer Minimumölmenge kontinuierlich während der Fahrt erkannt und angezeigt werden. Des weiteren können die gewonnenen Daten über die jeweilige Motorölmenge zur Ermittlung des Ölverbrauchs in Abhängigkeit von der Fahrleistung herangezogen werden, wodurch sich vergleichsweise genaue Ölverbrauchsdaten auch für Betriebszyklen mit langen ununterbrochenen Fahrbetriebsphasen gewinnen lassen. Die Ölverbrauchsdaten können sowohl zur direkten Ölverbrauchskontrolle in Echtzeit verwendet als auch zu Wartungsdiagnostikzwecken abgespeichert werden.

Charakteristischerweise gehören zu den erfaßten fahrzustandsindikativen Größen wenigstens die Fahrzeuggeschwindigkeit und/oder die Motordrehzahl, und die Füllmengenbestimmung erfolgt für mehrere Fahrzustände mit unterschiedlicher Fahrzeuggeschwindigkeit und/oder Motordrehzahl getrennt. Dies erlaubt eine spezifische und damit auch genauigkeitssteigernde Bewertung und/oder Behandlung der ermittelten Füllmengenwerte je nach Fahrzeuggeschwindigkeits- und/oder Motordrehzahlbereich, z.B. zur unterschiedlichen Gewichtung der Füllmengenwerte in den verschiedenen Fahrzustandsbereichen und/oder zur Kompensation von fahrzeuggeschwindigkeitsabhängigen oder motordrehzahlabhängigen Effekten, wie motordrehzahlabhängigen Motorölschluckmengen bei der Motorölmengenbestimmung.

Eine Weiterbildung der Erfindung nach Anspruch 2 sieht eine Temperaturkompensation der Flüssigkeitsmengenbestimmung vor, die Schwankungen aufgrund der temperaturabhängigen Ausdehnung der Flüssigkeit berücksichtigt.

Eine besonders vorteilhafte Weiterbildung der Erfindung sieht gemäß Anspruch 3 für den Fall einer Motorölmengenbestimmung vor, die Motordrehzahl als eine fahrzustandsspezifische Größe zu erfassen und bei der Ölmengenbestimmung zu berücksichtigen. Dies trägt der Tatsache Rechnung, daß bei gegebener Motorölmenge im laufenden Motorbetrieb ein motordrehzahlabhängiger Ölanteil als sogenannte Schluckmenge in Umlauf ist und von einer momentanen Füllstandsmessung nicht erfaßt wird. Aus der Kenntnis der Motordrehzahl läßt sich dieser Schluckmengenanteil ermitteln und bei der Umrechnung des gemessenen Füllstandes in die momentane Ölmenge korrigierend berücksichtigen.

In Weiterbildung der Erfindung nach Anspruch 4 wird die Fahrleistung zwischen Flüssigkeitsnachfüllvorgängen in Fahrleistungsklassen, z.B. in Intervalle mit einer Länge von 50km oder 100km, unterteilt, und für jede Fahrleistungsklasse werden einzeln Füllmengenmittelwerte aus den für diese Klasse jeweils ermittelten Füllmengenmeßwerten berechnet. Durch diese statistische Mittelungsprozedur werden untypische Füllstandsmeßwerte, die z.B. durch starkes Abbremsen des Fahrzeugs oder plötzliche Motordrehzahländerungen verursacht sind, herausgemittelt, was die Zuverlässigkeit der Flüssigkeitsmengenbestimmung erhöht. Außerdem ermöglicht diese Maßnahme die Ermittlung des Verlaufs des Flüssigkeitsverbrauchs, z.B. des Motorölverbrauchs, in Abhängigkeit von der Fahrleistung anhand zuverlässiger, statistisch gemittelter Daten.

In einer Weiterbildung der Erfindung nach Anspruch 5 werden mehrere voneinander getrennte Fahrzustandsbereiche, z.B. mit unterschiedlicher Fahrzeuggeschwindigkeit und/oder Motordrehzahl, aus der Gesamtheit möglicher Fahrzustände ausgewählt, wobei die ermittelten Flüssigkeitsmengen jeweils spezifisch dem momentanen Fahrzustand zugeordnet werden. Beispielsweise lassen sich auf diese Weise Flüssigkeitsmengenbestimmungen auf Stadtfahrtabschnitten, Landstraßenabschnitten und Autobahnfahrtabschnitten voneinander unterscheiden und bei Bedarf unterschiedlich bewerten. So können die auf Füllstandsmessungen während Autobahnfahrten basierenden Füllmengenwerte stärker gewichtet werden als solche von Stadtfahrten, um zu berücksichtigen, daß die Füllstandsschwankungen auf gleichmäßigeren Autobahnfahrten im Durchschnitt geringer sind als bei Stadtfahrten, bei denen häufiger Fahrzeuggeschwindigkeitswechsel auftreten.

In einer Weiterbildung der Erfindung nach Anspruch 6 ist zusätzlich eine Füllmengenbestimmung nach eingeschalteter Zündung und vor dem Starten des Motors in Abhängigkeit des Füllstands, der Öltemperatur und der Fahrzeugabstellzeit vorgesehen. Bei Vorgabe einer ausreichend langen Abstellzeit, die das Öl nach Abstellen des Motors zum Zurücklaufen in die Ölwanne benötigt, wird durch diese Füllstandsmessung mit anschließender Temperaturkompensation ein sehr zuverlässiger Flüssigkeitsmengenwert gewonnen, der beispielsweise dazu verwendet werden kann, dem Fahrer bei Beginn der Fahrt das Flüssigkeitsdefizit als Differenz aus einer maximalen Füllmenge und der momentanen Füllmenge anzuzeigen.

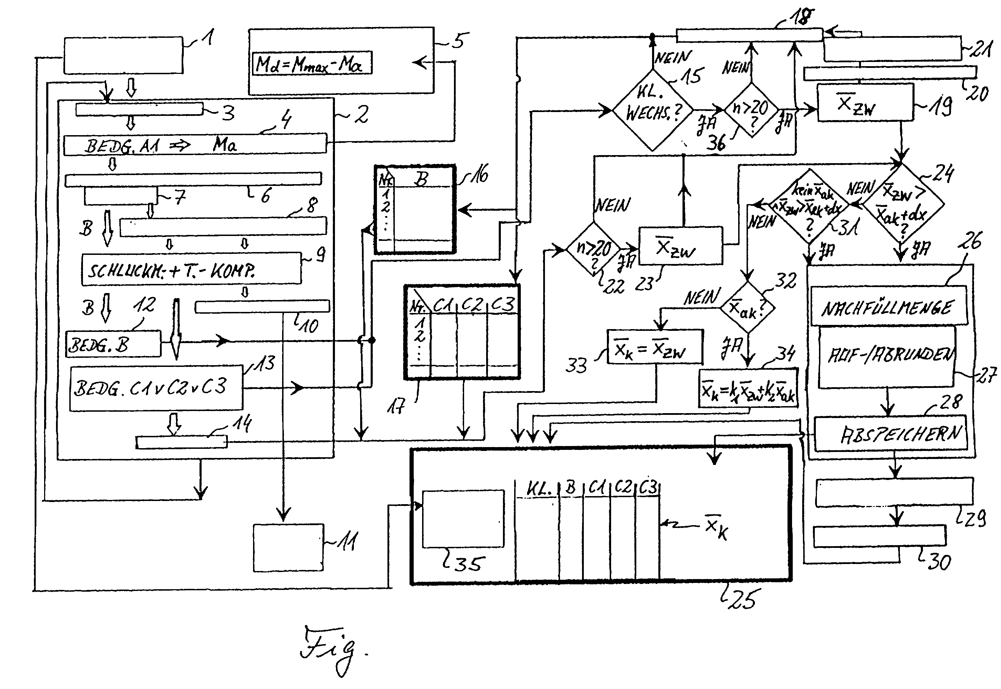

Eine bevorzugte Ausführungsform der Erfindung ist in der Zeichnung dargestellt und wird nachfolgend beschrieben.

Die einzige Figur zeigt einen Programmablaufplan eines Verfahrens zur Motorölmengenbestimmung anhand von Motorölfüllstandsmessungen.

Das in der Figur in seinem Programmablauf dargestellte Verfahren dient der On-board-Bestimmung der jeweils momentanen Motorölmenge über laufende Füllstandsmessungen nicht nur bei stehendem Fahrzeug und abgestelltem Motor, sonder auch im laufenden Fahrbetrieb. Das Verfahren ist in einer Weise, die sich für den Fachmann aus der nachfolgenden Beschreibung seiner Funktionsweise ohne weiteres ergibt, in der Fahrzeugelektronik des zugehörigen Kraftfahrzeuges implementiert. Insbesondere umfaßt die zugehörige Hardware eine Rechnereinheit, einen elektronischen Speicher mit ausreichender Kapazität und periphere Einheiten, z.B. zur Dateneingabe und zur Anzeige von Warnmeldungen sowie der jeweils bestimmten Motorölmenge. Außerdem ist ein herkömmlicher Ölsensor vorgesehen, der den Ölfüllstand, die Ölqualität und die Öltemperatur erfaßt und diese Informationen an die Rechnereinheit weiterleitet.

Zunächst wird in einem ersten Schritt (1) einmalig bei der Fahrzeugfertigung oder in einer Werkstatt eine Füllstandskalibrierung auf die sich für den speziellen Motor ergebende maximale Ölmenge durchgeführt, mit welcher der zu dieser maximalen Ölmenge gehörige maximale Füllstand exakt festgelegt wird. Damit werden Fertigungstoleranzen und Änderungen in der Geometrie des Motorölkreislaufs, z.B. der Ölwanne, berücksichtigt. Der erhaltene Kalibrierwert wird in einem Speicherteil (35) eines Langzeitspeichers (25) abgelegt, wobei letzterer als nichtflüchtiger Speicher realisiert ist, dessen Speicherinhalt auch bei ausgeschalteter Zündung erhalten bleibt.

Im nachfolgenden Verfahrensteil (2) erfolgt dann in fahrzustandsabhängiger Weise eine jeweilige Ölmengenbestimmung. Als Eingangsgrößen hierfür dienen neben der vom Ölsensor gelieferten Information über Ölstand, Öltemperatur und Ölqualität die Motordrehzahl, die Fahrzeuggeschwindigkeit, die Fahrleistung, d.h. der Kilometerstand, und der Zündungsstatus. Der Verfahrensteil (2) beginnt mit einem eingangsseitigen Schritt (3), in welchem festgestellt wird, ob die Zündung eingeschaltet und der Motor noch nicht gestartet ist. Wenn diese Bedingung (A1) ununterbrochen für eine vorgegebene Wartezeitdauer von beispielsweise 10s vorliegt, wird durch eine Füllstandsmessung die aktuelle Ölmenge ($M_a$) anhand einer vorgegebenen Kennlinie der Ölmenge in Abhängigkeit vom Füllstand ermittelt (Schritt 4). Durch die Vorgabe der Wartezeit wird gewährleistet, daß zuvor möglicherweise in Umlauf befindliches Motoröl in die Ölwanne zurückgelaufen ist, so daß sich durch diesen Meßvorgang ohne motordrehzahlabhängige Korrekturen der richtige Ölmengenwert bestimmen läßt. Dabei wird lediglich noch eine Temperaturkorrektur berücksichtigt, indem die aus dem Füllstand resultierende Ölmenge über einen festen Skalierungsfaktor ($T_S$) von ungefähr 0,07%/°C auf eine gleichbleibende Referenztemperatur von 100°C skaliert wird. Der sich ergebende Ölmengenwert ($M_a$) wird dann mit dem kalibrierten Ölmengenmaximalwert ($M_{max}$) verglichen, wonach die resultierende Differenz als Ölmengendefizit ($M_d$) dem Fahrer über eine optische Anzeigeeinrichtung angezeigt wird (Schritt 5).

In einem nächsten Schritt (6) wird abgefragt, ob sowohl die Zündung eingeschaltet ist als auch der Motor gestartet wurde und ob die Öltemperatur bereits über einem vorgegebenen Mindestwert von beispielsweise 60°C liegt. Sobald dieser, den Fahrbetrieb mit weitgehend warmgelaufenem Motor charakterisierende Zustand erreicht ist, erfolgen zyklisch Messungen des aktuellen Motorfüllstandes mit vorgegebener Wiederholrate (Schritt 7). In diesem laufenden Fahrbetrieb ist der Füllstand jedoch großen dynamischen Schwankungen unterworfen, insbesondere ist die sogenannte Schluckmenge, d.h. derjenige Anteil des Motoröls, der bei laufendem Motor in Umlauf ist und nicht zum Füllstand in der Ölwanne beiträgt, abhängig von der Motordrehzahl. Darüber hinaus verursachen Bewegungen und Neigungen der Fahrzeugkarosserie ein Schwappen und Schrägstehen des Motorölpegels. Den Auswirkungen unterschiedlicher Motoröltemperaturen während des Fahrbetriebs wird durch die Vorgabe der Mindestöltemperatur und im übrigen durch die oben beschriebene Skalierung auf den Referenztemperaturwert begegnet.

Die Füllstandsmeßwerte werden zum einen zur Erkennung kritischer Ölfüllstände weiterverarbeitet (Schritt 8). Einzelne Ölspritzer sollen den Mittelwert nicht beeinträchtigen, weshalb übermäßig von Nachbarwerten abweichende Meßwerte ignoriert oder in Anlehnung an herkömmliche Dämpfungsmaßnahmen zum Erzielen einer gegenüber plötzlichen Füllstandsschwankungen ausreichend trägen Füllstandserfassung an Nachbarwerte angeglichen werden. Letzteres wird hier softwaremäßig durch ein geeignetes, digitales Filter realisiert. Die Filterfunktion kann z.B. so lauten, daß sich der gefilterte Füllstandsmeßwert zu einem bestimmten Bruchteil aus dem aktuellen, unkorrigierten Meßwert zuzüglich eines Restanteils aus dem vorangegangenen Meßwert ergibt. Beispielsweise können der aktuelle Meßwert mit 75% und der vorige Meßwert mit 25% gewichtet beitragen. Die gefilterten Füllstandsmeßwerte werden dann wie oben beschrieben auf den Referenztemperaturwert skaliert, um die jeweilige Temperaturausdehnung des Motoröls zu berücksichtigen (Schritt 9). Im selben Schritt (9) wird der Füllstandsmeßwert um den jeweils momentanen Schluckmengenanteil korrigiert. Dazu wird eine motorspezifische Kennlinie vorgegeben, die den Schluckmengenanteil und damit die von diesem verursachten Füllstandsänderungen in Abhängigkeit von der Motordrehzahl angibt. Die so korrigierten Füllstandsmeßwerte werden dann einer gleitenden Mittelwertbildung, z.B. über die jeweils letzten 20 Werte, unterzogen (Schritt 10). Eine entsprechende Filterung und gleitende Mittelwertbildung ist auch zur Erzielung korrigierter Werte aus hier nicht weiter beschriebenen, herkömmlichen Ölqualitätsmessungen vorgesehen, um auch für diese Meßgröße den Einfluß singulärer Meßwerte abzudämpfen, wie sie bezüglich des Füllstandes beispielsweise durch starkes Abbremsen des Fahrzeugs oder plötzliche Drehzahländerungen auftreten können. Wenn nun der auf diese Weise ermittelte, gleitende Füllstandsmittelwert über dem kalibrierten maximalen Füllstand liegt oder auf ein vorgegebenes Füllstandsminimum angesunken ist oder sich bereits merklich unterhalb des letzteren befindet, erfolgt über eine Warnleuchte eine entsprechende Überfüllungs-, Minimum- bzw. Unterfüllungswarnung (Schritt 11).

Parallel zu dieser Füllstandswarnüberwachung werden die gemessenen und anschließend hinsichtlich Temperatur und Schluckmenge korrigierten Füllstandsmeßwerte zur kontinuierlichen Gewinnung aktueller Ölmengenwerte im laufenden Fahrbetrieb, unterteilt in vier verschiedene Fahrbetriebsbereiche (B, C1, C2, C3), herangezogen. Als ein Bereich (B) ist der Fahrbetriebsbereich mit Fahrzeuggeschwindigkeiten unterhalb von 5km/h und einer Motordrehzahl zwischen 100U/min und 800U/min definiert. Er tritt z.B. auf, wenn das Fahrzeug mit laufendem Motor vor einer roten Ampel steht. Die drei anderen Bereiche (C1, C2, C3) sind dadurch festgelegt, daß die Motordrehzahl jeweils über 1000U/min liegt und sich die Fahrzeuggeschwindigkeit zwischen 5km/h und 60km/h, 60km/h und 110km/h beziehungsweise oberhalb von 110km/h befindet, was typischen Stadtfahrten, Landstraßenfahrten bzw. Autobahnfahrten entspricht. In den zugehörigen Verfahrensschritten (12, 13) wird abgefragt, ob die Bedingungen für einen der vier Bereiche (B, C1, C2, C3) erfüllt sind, wonach aus dem korrigierten Füllstandsmeßwert des jeweiligen Taktzyklus anhand einer motorspezifischen Ölmengen-Füllstands-Kennlinie, wie oben erwähnt, ein Ölmengenwert bestimmt wird, der spezifisch dem entsprechenden Fahrzustandsbereich zugeordnet wird. Der somit durch eine Füllstandsmessung im laufenden Fahrbetrieb gewonnene und hinsichtlich fahrdynamischer Schwankungseinflüsse bereinigte Ölmengenwert wird dann wie nachfolgend beschrieben weiterverarbeitet, während der Verfahrensteil (2) zur Gewinnung des nächsten aktuellen Ölmengenwertes getaktet wiederholt wird, bis das Ausschalten der Zündung (Schritt 14) erkannt wird.

Zur Weiterverarbeitung eines jeweils gewonnenen Ölmengenwertes wird zunächst abgefragt (Schritt 15), ob der aktuelle Kilometerstand seit einer letzten erkannten Motorölnachfüllung von einer Fahrleistungsklasse in die nächsthöhere gewechselt hat, wobei die Fahrleistung seit der letzten Ölnachfüllung in diese Fahrleistungsklassen mit vorgegebener Intervalllänge unterteilt wird, z.B. in eine erste Klasse von 0km bis 50km, eine zweite Klasse von 50km bis 100km usw.. Solange dies nicht der Fall ist, wird der neue Ölmengenwert in einem Zwischenspeicher (16) für den Fahrzustandsbereich (B) bzw. in jeweilige Teile eines Zwischenspeichers (17) für die Fahrzustandsbereiche (C1, C2, C3) geschrieben, wobei die Ölmengenwerte getrennt nach den vier Fahrzustandsbereichen (B, C1, C2, C3) abgespeichert werden. Wenn andererseits ein Fahrleistungsklassenwechsel erkannt wurde, wird in einem nächsten Abfrageschritt (36) festgestellt, ob im Zwischenspeicher für den aktuellen Fahrzustandsbereich in der bisherigen Fahrleistungsklasse bereits eine Anzahl (n) von mehr als 20 Einzelwerten vorhanden ist. Wenn dies nicht der Fall ist, bleiben diese Werte unberücksichtigt, indem der aktuelle Zwischenspeicher gelöscht wird (Schritt 18). Wenn hingegen mehr als 20 Werte vorliegen, wird vor dem Löschen des aktuellen Zwischenspeichers (Schritt 18) zunächst der Mittelwert ($\bar{x}_{zw}$) gebildet (Schritt 19), daraufhin ein neuer Zwischenspeicherteil eröffnet (Schritt 20) und der neueste Ölmengenwert als erster Einzelwert in den neu eröffneten Zwischenspeicherteil geschrieben (Schritt 21).

Analog erfolgt jeweils nach Einschreiben eines neuen Ölmengenwertes in einen der Zwischenspeicherbereiche (16, 17) sowie nach Ausschalten der Zündung (Schritt 14) eine gleichartige Abfrage nach dem Vorhandensein von mehr als 20 Einzelwerten im aktuellen Zwischenspeicherbereich (Schritt 22). Wenn keine 20 Einzelwerte hintereinander in den gleichen Zwischenspeicherteil eines der vier Fahrzustandsbereiche (B, C1, C2, C3) eingeschrieben wurden, bleiben diese Werte wiederum unberücksichtigt, und der aktuelle Zwischenspeicher wird gelöscht (Schritt 18). Wenn mehr als 20 Einzelwerte vorhanden sind, erfolgt wiederum die Bestimmung von deren beispielsweise arithmetischem Mittelwert ($\bar{x}_{zw}$) (Schritt 23), wonach dann erst der aktuelle Zwischenspeicherteil gelöscht wird (Schritt 18).

Nach einer jeweiligen Mittelwertbildung von Zwischenspeichereinzelwerten (Schritte 19 und 23) wird in einem anschließenden Abfrageschritt (24) geprüft, ob dieser Ölmengenmittelwert ($\bar{x}_{zw}$) größer als ein bislang für die aktuelle Fahrleistungsklasse und den aktuellen Fahrzustandsbereich vorliegender, in dem zugehörigen Langzeitspeicher (25) abgespeicherter Mittelwert ($\bar{x}_{ak}$) zuzüglich eines Zuschlags (dx) von beispielsweise 0,5Liter ist. Wenn dies der Fall ist, wird dies vom System als ein vorangegangener Ölnachfüllvorgang interpretiert, wobei der Zuschlag (dx) zweckmäßigerweise in der Größenordnung gewählt wird, in der typischerweise die kleinste Nachfüllmengeneinheit liegt. Dies berücksichtigend wird anschließend die nachgefüllte Ölmenge dadurch bestimmt (Schritt 26), daß die Differenz zwischen dem Zwischenspeichermittelwert ($\bar{x}_{zw}$) und dem Langzeitmittelwert ($\bar{x}_{ak}$) der aktuellen Klasse ermittelt und anschließend auf ein vielfaches der kleinsten Nachfüllmengeneinheit von z.B. 0,5l auf- oder abgerundet wird (Schritt 27). Die ermittelte Ölnachfüllmenge wird dann zusammen mit dem zugehörigen aktuellen Kilometerstand des Fahrzeugs abgespeichert (Schritt 28), wobei diese Daten später für Wartungsdiagnosezwecke wieder abgerufen werden können. Das Erkennen eines Ölnachfüllvorgangs hat des weiteren zur Folge, daß zunächst der die Ölmengenwerte betreffende Langzeitspeicherinhalt gelöscht und wieder auf die erste Fahrleistungsklasse zurückgesetzt wird (Schritt 29), wonach der neue Zwischenspeichermittelwert ($\bar{x}_{zw}$) als erster Ölmengenwert nach dem Nachfüllvorgang in den Langzeitspeicher eingeschrieben wird (Schritt 30).

Falls die bereits erwähnte ölnachfüllerkennende Abfrage (24) negativ beantwortet wird, wird geprüft, ob es am Eintrag eines Mittelwerts im Langzeitspeicher (25) bezüglich der aktuellen Fahrleistungsklasse fehlt und ob in diesem Fall der Zwischenspeichermittelwert ($\bar{x}_{zw}$) größer als der im Langzeitspeicher (25) abgelegte Mittelwert ($\bar{x}_{lk}$) der nächstniedrigeren Fahrleistungsklasse zuzüglich des Zuschlags (dx) ist (Schritt 31). Wenn dies der Fall ist, wird dies wiederum als zuvor stattgefundener Ölnachfüllvorgang interpretiert und wie oben beschrieben weiter verfahren, wobei anstelle des nicht vorhandenen Mittelwertes der aktuellen Klasse im Langzeitspeicher (25) derjenige ($\bar{x}_{lk}$) der nächstniedrigeren Klasse tritt. Endet hingegen auch diese Abfrage (31) verneinend, so hat kein Ölnachfüllvorgang stattgefunden und es wird als nächstes geprüft, ob im Langzeitspeicher (25) bereits ein Ölmengenmittelwert ($\bar{x}_{ak}$) für die aktuelle Fahrleistungsklasse abgelegt ist (Schritt 32). Ist dies nicht der Fall, wird der ermittelte aktuelle Zwischenspeichermittelwert ($\bar{x}_{zw}$) als erster Ölmengenmittelwert ($\bar{x}_{k}$) für diese Fahrleistungsklasse im entsprechenden Fahrzustands-Langzeitspeicherbereich abgelegt (Schritt 33). Ist hingegen bereits ein Mittelwert ($\bar{x}_{ak}$) im Langzeitspeicher (25) für diese Fahrleistungsklasse und den aktuellen Fahrzustandsbereich abgespeichert, so wird aus diesem bisher abgelegten Wert ($\bar{x}_{ak}$) und dem neuen Zwischenspeichermittelwert ($\bar{x}_{zw}$) ein gewichteter, neuer Mittelwert ($\bar{x}_{k}$) ermittelt und der betreffende Speicherinhalt des Langzeitspeichers (25) damit aktualisiert (Schritt 34), wobei die Gewichtung ($k_1$, $k_2$) entsprechend der Anzahl der zum jeweiligen Mittelwert beitragenden Einzelölmengenwerte erfolgt, d.h. $0 \leq k_1$, $k_2 \leq 1$ und $k_2 = 1 - k_1$.

Auf diese Weise werden im Langzeitspeicher (25) ab einem Ölnachfüllvorgang ermittelte Ölmengenwerte spezifisch der jeweiligen Fahrleistung seit Ölnachfüllung und den einzelnen Fahrzustandsbereichen (B, C1, C2, C3) zugeordnet abgespeichert. Sobald ein Ölnachfüllvorgang festgestellt wurde, wird vor dem Löschen der im Langzeitspeicher (25) abgelegten Ölmengenmittelwerte ($\bar{x}_{k}$) getrennt für jeden Fahrzustandsbereich aus den Werten der einzelnen Fahrleistungsklassen eine Rekursionsgerade ermittelt, deren Steigung dem Motorölverbrauch im jeweiligen Fahrzustandsbereich entspricht und in einem Verbrauchsspeicher abgespeichert wird. Dabei werden zweckmäßigerweise Ölverbrauchswerte jeweils für eine vorgegebene, vorangegangene Fahrleistung, z.B. die letzten 1000km, durch Berücksichtigung einer entsprechenden Zahl früherer Fahrleistungsklassen ermittelt, so daß im Verbrauchsspeicher für jeden Fahrzustandsbereich (B, C1, C2, C3) aufeinanderfolgende Ölverbrauchswerte im Rasterabstand von beispielsweise 1000km vorliegen. Die Unterscheidung verschiedener Fahrzustandsbereiche (B, C1, C2, C3) ermöglicht es zudem, eine Gewichtung der Ölmengenmittelwerte bzw. der Ölverbrauchswerte vorzunehmen. Insbesondere kann vorgesehen sein, den Autobahnfahrtbereich (C3) höher als den Landstraßenfahrbereich (C2) und diesen wiederum höher als den Stadtfahrtbereich (C1) zu gewichten, entsprechend der im Durchschnitt geringeren fahrzustandsabhängigen Füllstandsschwankungen in Autobahnfahrtphasen mit dementsprechend höherer Zuverlässigkeit der Füllstandsmessungen.

Wie sich aus obigem ergibt, ermöglicht das Verfahren eine kontinuierliche On-board-Überwachung und -Bestimmung der aktuellen Motorölmenge nicht nur bei abgestelltem Motor, sondern auch während des Fahrbetriebs. Neben Warnmeldungen hinsichtlich eines zu hohen oder zu niedrigen Ölstandes werden insbesondere Ölnachfüllvorgänge vom System selbsttätig erkannt, wobei die nachgefüllte Ölmenge automatisch ermittelt wird. Zusätzlich läßt sich der Ölverbrauch in Abhängigkeit von der Fahrleistung seit einem letzten Nachfüllvorgang sowie spezifisch für unterschiedliche Fahrzustände ermitteln. Es versteht sich, daß auch andere, in weitgehend abgeschlossenen Systemen innerhalb eines Kraftfahrzeuges verwendete Flüssigkeiten über Füllstandsmessungen mit dem erfindungsgemäßen Verfahren bezüglich der aktuell vorhandenen Flüssigkeitsmenge und daraus abgeleiteten Informationen, wie den Fülligkeitsverbrauch, überwacht werden können. Je nach Anwendungsfall können dabei die einzelnen Verfahrensparameter in geeigneter Weise gegenüber den Parameterwerten des oben angegebenen Beispiels modifiziert werden.

**Patentansprüche**

1. Verfahren zur Bestimmung der Menge einer in einem weitgehend abgeschlossenen System eines Kraftfahrzeuges befindlichen Flüssigkeit, deren Füllstand im System fahrzustandsabhängig schwankt, insbesondere der Motorölmenge, bei dem

   - im Fahrbetrieb fahrzustandsindikative Größen erfaßt werden, zu denen wenigstens die Fahrzeuggeschwindigkeit und/oder die Motordrehzahl gehören, und daraus der momentane Fahrzustand ermittelt wird und
   - wenigstens während ausgewählter Fahrzustände im Fahrbetrieb laufend mittels eines Füllstandsensors der momentane Wert des Füllstandes erfaßt und daraus anhand einer vorgegebenen Abhängigkeit der Flüssigkeitsmenge vom Fahrzustand und vom Füllstand die momentane Füllmenge bestimmt wird,

**dadurch gekennzeichnet, daß**

- die ausgewählten Fahrzustände in eine vorgebbare Anzahl verschiedener Fahrzustandsbereiche mit unterschiedlicher Fahrzeuggeschwindigkeit und/oder Motordrehzahl aufgeteilt werden und die Füllmengenwerte anhand der erfaßten Füllstandswerte für die verschiedenen Fahrzustandsbereiche getrennt bestimmt, abgespeichert und weiterverarbeitet werden.

2. Verfahren nach Anspruch 1, weiter
**dadurch gekennzeichnet, daß**
die Temperatur der Flüssigkeit erfaßt und die Flüssigkeitsmenge anhand eines vorgegebenen Skalierungsfaktors ($T_S$) auf eine vorgegebene Referenztemperatur ($T_R$) bezogen wird.

3. Verfahren nach Anspruch 1 oder 2 zur Bestimmung der Motorölmenge, weiter
**dadurch gekennzeichnet, daß**
als eine fahrzustandsindikative Größe die Motordrehzahl erfaßt und die Motorölmenge unter Berücksichtigung eines Schluckmengenanteils bestimmt wird, der anhand einer vorgegebenen Schluckmengenanteil-Motordrehzahl-Abhängigkeit ermittelt wird.

4. Verfahren nach einem der Ansprüche 1 bis 3, weiter
**dadurch gekennzeichnet, daß**
die Fahrleistung zwischen Flüssigkeitsnachfüllvorgängen in Fahrleistungsklassen unterteilt wird, wobei für jede Klasse getrennt Füllmengenmittelwerte aus den einzelnen, zu der jeweiligen Klasse ermittelten Füllmengenwerten bestimmt werden.

5. Verfahren nach einem der Ansprüche 1 bis 4, weiter
**dadurch gekennzeichnet, daß**
mehrere voneinander verschiedene Geschwindigkeitsbereiche (B, C1, C2, C3) aus der Gesamtheit möglicher Fahrzustände ausgewählt und die Füllmengenwerte jeweils dem zugehörigen Bereich zugeordnet werden.

6. Verfahren nach einem der Ansprüche 1 bis 5, weiter
**dadurch gekennzeichnet, daß**
nach eingeschalteter Zündung und vor Starten des Motors der Füllstand, die Flüssigkeitstemperatur und die Fahrzeugabstellzeit erfaßt werden und daraus die momentane Flüssigkeitsmenge bestimmt wird.

**Claims**

1. Process, for determining the quantity of a liquid, particularly motor oil, in a largely closed system in a vehicle, the level of fullness of which varies according to the state of movement of the vehicle concerned, with which

- quantities, which are representative of the state of movement of a given vehicle, including, at least the speed of the vehicle and/or the engine speed, are recorded, and the momentary standstill of the given vehicle is determined from these quantities, and
- at least during selected states of movement during driving, the actual level of fullness is continuously recorded, by means of a fullness-level detector, and, from this, the quantity of liquid concerned is determined from the state of movement, in connection with a relationship between these, and the actual filling capacity is determined from the given level of fullness,

characterized in that

- the selected states of movement are divided up into an adjustable number of different ranges with different vehicle speeds and/or engine speeds, and the filling capacity values are separately determined, for the different ranges of state of movement, on the basis of the recorded levels of fullness, these filling capacity values being stored and further processed.

2. Process in accordance with claim 1, further characterized in that
the temperature of the liquid is recorded and the quantity of liquid is related to a set reference temperature ($T_R$), using a set scaling factor ($T_S$).

3. Process, in accordance with claim 1 or 2, for determining motor oil quantity, further characterized in that
the engine speed is determined as an indicator of the state of movement of a vehicle, and the quantity of motor oil is determined taking the portion of oil consumed into account, the quantity of oil being consumed being determined using a set relationship of consumption to engine speed.

4. Process, in accordance with any one of claims I to 3, further characterized in that
drive performance, during the period between successively refilling with the liquid concerned, is divided up into performance grades, whereby, for each grade, separate average filling quantities are determined from the individual filling quantities for the respective grade.

**5.** Process in accordance with any one of claims I to 4, further characterized in that

several different speed ranges (B, C1, C2, C3) are selected from all the possible states of movement of a vehicle, and filling quantities are linked to the associated range.

**6.** Process in accordance with any one of claims 1 to 5, further characterized in that,

after the ignition has been turned on, and before the engine starts, the level of fullness, the temperature of the liquid, and the parking or storage time are recorded, and the actual, current quantity of liquid concerned is determined from these.

## Revendications

**1.** Procédé pour déterminer la quantité d'un liquide qui est situé dans un système, qui est dans une large mesure fermé, d'un véhicule automobile, et dont l'état de remplissage varie dans le système en fonction de l'état de déplacement, notamment la quantité d'huile du moteur, selon lequel

- lors du déplacement, on détecte des grandeurs qui sont indicatives de l'état de déplacement et qui incluent au moins la vitesse du véhicule et/ ou la vitesse de rotation du moteur, et on détermine à partir de là l'état de déplacement instantané, et
- au moins pendant des étapes de déplacement sélectionnées pendant le déplacement, la valeur instantanée de l'état de remplissage est détectée en permanence à l'aide d'un capteur de l'état de remplissage et la quantité instantanée de remplissage est déterminée à partir de là en fonction d'une dépendance prédéterminée de la quantité de liquide vis-à-vis de l'état de déplacement et du niveau de remplissage instantané,

caractérisé en ce que

- les étapes de déplacement sélectionnées sont réparties en un nombre pouvant être prédéterminé de gammes différentes d'état de déplacement avec une vitesse différente du véhicule et/ ou une vitesse de rotation différente du moteur, et les valeurs de la quantité de remplissage sont déterminées séparément, sur la base des valeurs détectées du niveau de remplissage, pour les différentes gammes d'états de fonctionnement et sont mémorisées et soumises à un traitement ultérieur.

**2.** Procédé selon la revendication 1, caractérisé en outre en ce que la température du liquide est détectée et la quantité de liquide est rapportée à une température de référence prédéterminée $(T_R)$ sur la base d'un facteur prédéterminé de cadrage d'échelle $(T_R)$.

**3.** Procédé selon la revendication 1 ou 2 pour déterminer la quantité d'huile du moteur, caractérisé en outre en ce que la vitesse de rotation du moteur est détectée en tant que grandeur indicative de l'état de déplacement, et la quantité d'huile du moteur est déterminée en tenant compte d'une quantité partielle absorbée, qui est déterminée en fonction d'une relation prédéterminée entre la quantité partielle absorbée et la vitesse de rotation du moteur.

**4.** Procédé selon l'une des revendications 1 à 3, caractérisé en outre en ce que la possibilité de déplacement entre des remplissages complets de liquide est répartie entre des classes de possibilités de déplacement, et des valeurs moyennes de la quantité de remplissage sont déterminées séparément, pour chaque classe, à partir des valeurs des quantités de remplissage individuelles déterminées en rapport avec la classe considérée.

**5.** Procédé selon l'une des revendications 1 à 4, caractérisé en outre en ce que plusieurs gammes différentes de vitesses (B,C1,C2,C3) sont sélectionnées à partir de l'ensemble d'états de déplacements possibles et que les valeurs des quantités de remplissage sont associées respectivement à la gamme correspondante.

**6.** Procédé selon l'une des revendications 1 à 5, caractérisé en outre en ce qu'après activation de l'allumage et avant le démarrage du moteur, l'état de remplissage, la température du liquide et l'état arrêté du véhicule sont détectés et la quantité de liquide instantanée est déterminée à partir de là.

Fig.